# EUROPEAN PATENT APPLICATION

(11) **EP 1 925 496 A2**
(43) Date of publication of application: **28.05.2008**
(21) Application number: 07121284.9
(22) Date of filing: 22.11.2007
(51) Int. Cl.: B60N 2/28

(54) **Booster cushion with storage capability**

(30) Priority: 22.11.2006 GB 0623329
(71) Applicant: Brown, Nicola, Faringdon Oxfordshire SN7 7LA (GB); Smith, Louise, Faringdon Oxfordshire SN7 7AF (GB)
(72) Inventor: Brown, Nicola, Faringdon Oxfordshire SN7 7LA (GB); Smith, Louise, Faringdon Oxfordshire SN7 7AF (GB)
(74) Representative: Molony, Anna

(57) **Abstract**

The present invention relates to a child booster cushion for use in vehicles. The booster cushion consists of seat body (12), lap belt engaging lugs (22), door (28) and a storage cavity (26). The door (28) is hingedly mounted via hinge pin (72), which also forms a grab handle. A storage box (74) is provided and is adapted to be received within the storage cavity (26).

## Description

The present invention relates to a child booster cushion for use in vehicles.

Following the introduction of new legislation in the UK in the UK in September 2006, all children under 135 cm in height, up to the age of 12, must travel on a suitable child seat or booster cushion when travelling in a vehicle. Smaller children generally use a car seat including a seat part and a back, having its own restraint straps. Older, larger children often use simply a booster cushion (also called a booster seat) which is the seat part only. This usually sits freely on a vehicle seat and a child is restrained using the normal adult seat belts with which the vehicle is fitted. Some car seats consist of separable back and seat parts, so that the back can be removed leaving just the seat part to serve as a booster cushion.

Following introduction of the new legislation, some older children who previously had given up using a booster cushion will now need to use one once again. Therefore, a child will need to be provided with an appropriate seat even if travelling in a vehicle in which he or she does not usually travel and adults will need to make arrangements for suitable seats always to be available. This may entail some inconvenience where a child travels in different vehicles, for example if a child is taken to school in one vehicle and picked up in another, and using a booster cushion may be unpopular with some children.

The present invention provides a booster cushion comprising a seat body, the seat body including at least one storage compartment, and carrying means to enable the booster cushion to be carried and further comprises at least one storage container located in the or each storage compartment and removable therefrom.

Thus, a child's booster cushion with improved functionality is provided. The booster cushion is easily portable and has dual use as a storage container.

Preferably, the carrying means comprises one or more shoulder straps enabling the booster cushion to be carried in the manner of a rucksack. This is the most efficient and comfortable way for the item to be carried. However, the booster cushion may also be provided with at least one handle for the user to grasp by hand.

Preferably the booster cushion comprises a user support side and an opposing underside and at least one storage compartment is formed in the underside.

Preferably, the booster cushion further comprises a removable cover fitted over the seat body. In this case, the carrying means are attached to the cover.

The cover may comprise additional storage pockets and may have fixing means to secure it to the seat body.

The cover may comprise a flap which can be opened to allow access to the or each storage compartment.

The cover may also include reinforcing means to limit the extent to which the flap, can be opened.

The cover may comprise attachment means to which other accessories can be releasably attached. For example, the accessory may be an additional storage bag which can be engaged with the attachment means. Preferably, when attached, the bag will sit against a user support surface of the seat body.

Preferably, the cover further comprises padding for the comfort of the user when carrying the booster cushion in the manner of a rucksack.

In one embodiment, the booster cushion further comprises a door connected to the seat body, which can be opened to allow access to the storage compartment and closed to close the storage compartment.

Preferably the booster cushion further comprises first and second lap belt engaging members provided on the seat body. The lap belt engaging members are preferably movably mounted on the seat body, the lap belt engaging members being movable between a deployed position, in which they extend generally outwardly from the seat body for engagement with a vehicle lap belt, and a stowed position, generally adjacent the seat body. The lap belt engaging members are preferably pivotably mounted on the seat body.
The provision of lap belt engaging members enables the booster cushion to be engaged by the lap belt section of a vehicle seat belt during use, thereby ensuring that the seat belt and booster cushion remain in the correct position during use. Being movably mounted, the lap belt engaging members can be stowed away when the booster cushion in not in use in a vehicle, to give the booster cushion a less bulky shape when it is being carried by a user.

The booster cushion preferably further comprises first and second side walls provided between the user support side and the underside, the side walls being provided with recesses adapted to receive a respective lap belt engaging member in its stowed position. The lap belt engaging members are thereby stowed within the structure of the booster cushion and so do not increase the dimensions of the booster cushion.

Preferably, the booster cushion further comprises handle means by which a user can carry the booster cushion. The handle means is preferably provided between the side walls. The handle means may form the hinge pin for the door.

The invention will now be described in detail, by way of example only, with reference to the accompanying drawings in which:-
Figure 1 is a perspective view of one example of a booster cushion;
Figure 2 is a underneath view of the booster cushion of Figure 1;
Figure 3 is a cross-section of the booster cushion of Figures 1 and 2, along line A-A;
Figure 4 is a perspective view from the underside of the booster cushion, with the storage cavity open;
Figure 5 is a view similar to Figure 4 including a cover and carrying straps;
Figure 6 is a perspective view showing the forward part only of the booster cushion of Figure 1 with the cover on;
Figure 7 is a perspective view from the underside of an embodiment of a booster cushion according to the invention;
Figure 8 is a front view of another example of a booster cushion according to the invention;
Figure 9 is a diagrammatic exploded view of the booster cushion of Figure 8;
Figure 10 is a perspective view of a further example of a booster cushion according to the invention, with the lap belt engaging arms in the deployed position; and
Figure 11 shows the booster cushion of Figure 10 with the lap belt engaging arms in the stowed position.

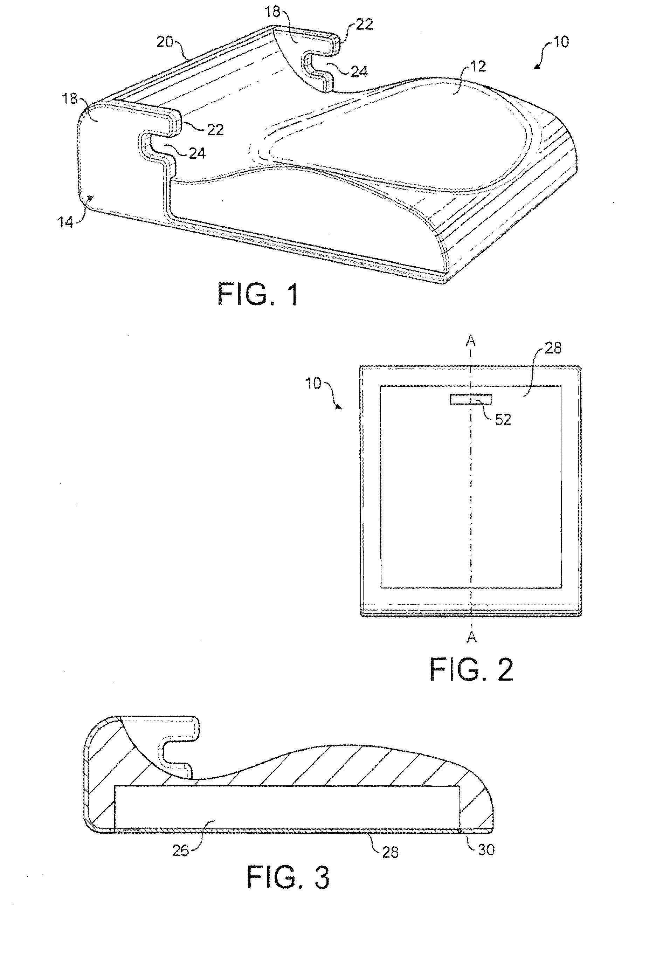

Figure 1 shows one example of a booster cushion 10. In this view, it resembles a conventional booster cushion consisting of a seat body 12. This may be either a booster cushion of the type sold as a single item on its own or the seat part of a car seat having separable back and seat parts. Typically, the seat body 12 is formed from extra high density expanded polystyrene produced in accordance with the appropriate safety standards and regulations, although other materials could be used. In the UK, this is UN ECE 44.03. During moulding of the polystyrene, one or more mesh panels may be incorporated to add strength and rigidity.

The seat body 12 is suitably shaped for comfort and support of the user. For added strength and rigidity and to protect the seat body 12, it is normally secured within a plastic shell 14. The shell 14 comprises a base wall 16 and side and rear walls 18, 20 which extend upwardly from the base 16 to surround the rearward part of the seat body 12.

In this way, a strong yet lightweight seat is provided. At least the side walls 18 of the shell 14 extend above the upper surface of the seat body 12. The top of each side wall 18 is formed with forwardly projecting lugs 22, defining recesses 24 below them. In use, the lap belt of the vehicle's normal seat belt extends across the lap of a user seated on the booster cushion 10 and fits within the recesses 24 to maintain it in position for safety and comfort. However, any suitable alternative fixing means for securing a lap belt could be used.

It will be appreciated that the booster cushion need not comprise a separate body 12 and shell 14, but could be formed as a unitary body if preferred.

By way of example only, the typical dimensions of the booster cushion 10 are as follows:
Front to rear length of base: approximately 340 mm
Side to side width of base: approximately 390 mm
Maximum depth of seat body 12: approximately 150 mm
Length of side walls 18: approximately 160 mm
Depth of lugs 22: approximately 40 mm
Depth of recesses 24: approximately 70 mm.

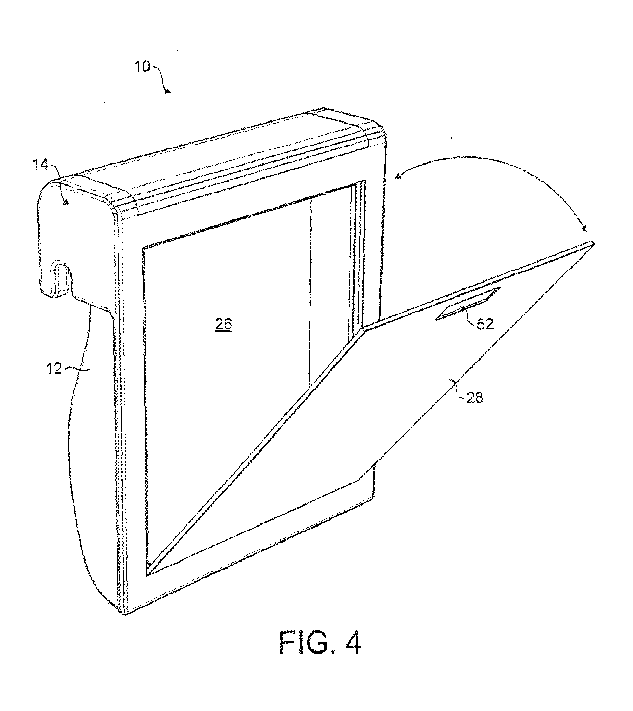

As shown in Figures 2, 3 and 4, the booster cushion 10 of the present invention differs from the prior art in that the seat body 12 is hollowed out on its underside to provide a storage cavity 26.

The base wall 16 of the plastic shell 14 extends across the bottom of the seat body 12 and across the cavity 26. In addition, the base wall 16 is provided with a door 28 to close the cavity 26 and form the lowermost surface of the booster cushion 10. The door 28 is pivotable relative to the shell 14 to allow access into the cavity 26 and a closure mechanism is provided to secure it in the closed position. Preferably the door includes a handle or slot 52 to facilitate opening and closing.

In the embodiment illustrated, the door 28 is integral with the shell 14 and connected via a flexible plastic web 30. Alternatively, the door 28 could be separate from the shell 14 but connected with a hinge made from metal, plastic or any suitable material. The closure mechanism 32 is not shown in detail but may be a simple catch with projections which interengage with a snap fit. Such hinges and catches are common, for example on plastic storage boxes used for baby wipes and so on. However, it will be appreciated that any suitable form of hinge or pivot connection, and any suitable form of closure mechanism can be used.

Also in this example, the hinge 30 is located at a forward part of the booster cushion 10 and the closure mechanism 32 towards the rear. However, the configuration could be reversed, or the door 28 could be arranged to hinge along one side of the booster cushion 10.

As best shown in Figures 2 and 3, the cavity 26 is arranged to be as large as possible, to provide a useful storage capacity, whilst still ensuring that the booster cushion 10 has the necessary strength and rigidity to support a child and perform its function as a safety booster seat.

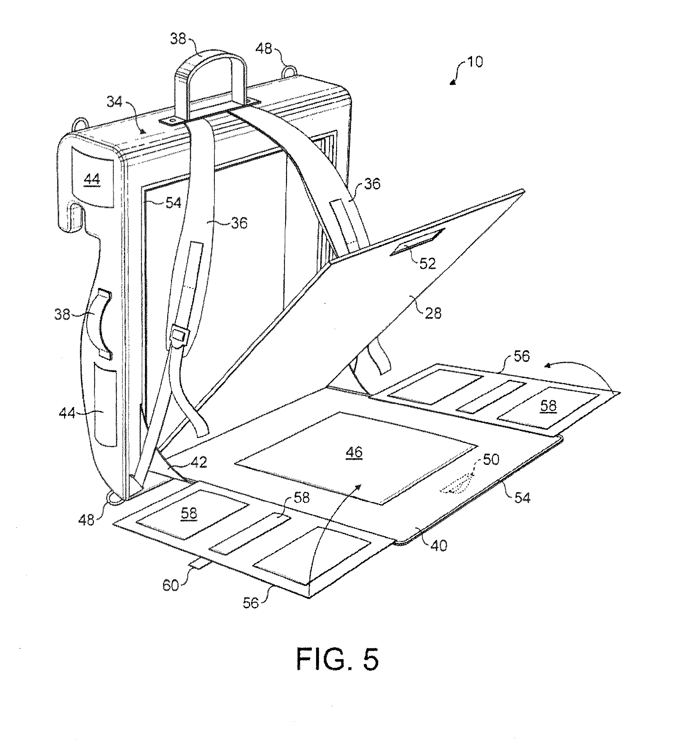

As shown in Figure 5, the booster cushion 10 is further provided with a cover 34. Typically, this is a flexible fabric cover, removably fitted over the seat body 12 and shell 14 so that it can be taken off for cleaning. The fabric may be waterproof and fireproof in accordance with any relevant safety standards. The cover 34 is provided with various carrying means. In this example, it is provided with a pair of shoulder straps 36 and one or more grab handles 38.

In a preferred embodiment, the booster cushion 10 can be worn as a rucksack. In this case, as shown in Figure 5, the forward part of the booster cushion 10 becomes the lower part of the rucksack, while the rear of the booster cushion 10 becomes the upper part of the rucksack.

Nevertheless, if preferred, the booster cushion 10 could be arranged to be the other way up when carried as a rucksack, so that the forward part of the booster cushion becomes the upper part of the rucksack.

Whichever of these orientations is employed, the upper ends of the shoulder straps 36 are secured to the cover 34 at an appropriate location which, when in use as a rucksack, will be towards the top centre of the item. The lower ends of the shoulder straps 26 are secured to opposing corners of the lower end of the item when used as a rucksack. The shoulder straps 36 maybe padded and length-adjustable in the manner of conventional rucksack shoulder straps. One end of each strap 36 may be detachable from the cover 34, to make it easier for the cover 34 to be fitted over the seat body 12 and shell 14 and to avoid impeding access to the storage compartment 26.

Alternatively, the cover 34 could be provided with a single shoulder strap. It is known for some rucksacks to have only a single shoulder strap which in use extends over one shoulder and diagonally across the user's body. It will be clear that such a single shoulder strap arrangement is also possible in the present invention.

Additional grab handles 38 maybe provided on the cover 34. Conveniently, one such handle 38 maybe provided adjacent the upper ends of the shoulder straps 36. Further grab handles 38 maybe provided on each side of the booster cushion 10 (only one of which is visible in Figure 5). A handle 38 could also be provided on the forward edge of the seat, i.e. the lowermost edge as seen in Figure 5. The handles 38 may also serve as hanging loops to enable the booster cushion to be hung up when not in use.

The cover 34 maybe also be provided with additional storage pockets 44 located on the sides of the booster cushion 10 in use, or on the lowermost edge in the orientation of Figure 5, for example elastic mesh pockets as commonly found on rucksacks.

The cover 34 also includes a flap 40 covering the door 28 to the storage cavity 26. The inner side of the flap 40 may incorporate one or more further storage pockets 46.

The flap 40 may also include fold-out portions 56 carrying further pockets, pen holders or the like 58. As shown in Figure 5, there may be a pair of fold-out portions 56, securable together by a fastener 60, such as a hook and loop fastener or press stud etc.

The rest of the cover 34 maybe securable to the shell 14 by removable fasteners to secure it in place.

Alternatively, it maybe simply be shaped such that it fits snugly over the seat body 12 and shell 14 without need for further fasteners. If necessary, the cover 34 may include elasticated parts, pleats or folds etc, optionally with fasteners such as zips, hook and loop fasteners, press studs etc, to allow it to be opened up in order to fit over the seat body 12 and shell 14 and then be reduced to a close fit once in place.

In addition to the door 28 being securable in its closed position, the flap 40 is preferably securable to the main body of the cover 34 by suitable fastening means e.g. a zip 54 may extend along the three free edges of the flap 40 and corresponding parts of the cover 34. Alternatively, it could be provided with hook and loop fasteners, press studs or any other convenient fastening means. The flap 40 is also provided with some form of handle 50 in order to assist opening and closing the flap 14. Reinforcing webs 42 maybe provided between the flap 40 and the main body of the cover 34 to limit the extent to which the flap 40 and door 28 can be opened. This helps to protect the hinge 30 between the door 28 and the shell 14.

The booster cushion 10 can also be adapted to receive additional accessories, in particular a further detachable bag when used in the rucksack configuration. Attachment points can be provided on the cover 34, to which a bag can be connected. For example, loops 48 can be provided at each corner to receive clips on the corners of the bag (not shown) so that in use a bag rests against the user support side of the seat body 12. In this way, increased storage capacity is provided while allowing the additional bag and booster cushion to be conveniently carried together as one unit.

The cover 34, particularly the flap 40 which will be against the user's back when carried as a rucksack, may be provided with padding for additional comfort. Further pockets could also be provided on the flap 40. The flap 40 may be reinforced to provide rigidity.

The cover 34 is preferably formed of a cleanable, non-slip fabric. It maybe decorated to appeal to children, for example with a particular theme or brand, to help encourage acceptance and use of the product.

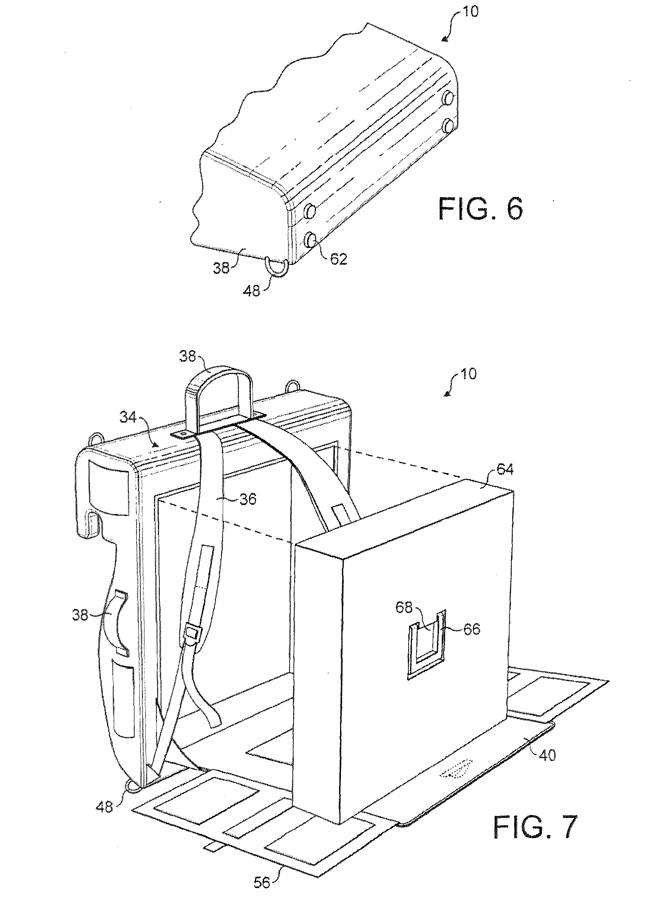

Preferably, the booster cushion 10 is flattened slightly along the front edge so that when it is in the upright, rucksack orientation it is able to stand up unaided. The cover 34 may be provided with projecting feet 62 to facilitate this as shown in Figure 6.

An embodiment of booster cushion 10 in accordance with the present invention is shown in Figure 7. In most respects this is the same as the first example and accordingly the same reference numerals are used. However, in this case the storage compartment 26 is not provided with a door. Instead, a completely separate storage box 64 is provided. This is sized to fit snugly within the storage compartment 26, but can be completely removed therefrom as indicated by the dotted lines in Figure 7.

In this way, when the booster cushion 10 is not in use, a user can detach the storage box 64 and take it to another location. For example, the storage box 64 could be used as a lunch box and being removable from the booster cushion 10 makes it easier to clean, fill and use the storage box 64. The storage box 64 may itself hold further containers such as a drinks bottle, smaller containers for food and so on.

The storage box 64 may be plastic or metal or any suitable material. When the storage box 64 is to be carried within the booster cushion 10, it is fitted into the storage cavity 26 and retained in that position by closing the flap 40 of the cover 34 as described previously.

To facilitate removal of the storage box 64 from the storage cavity 26, it may include a handle 66 hinged to its forward facing surface. This surface may have a recess 68 to receive the handle 66 when it is folded flat. Alternatively, the storage cavity 26 may define a finger space allowing the finger to be inserted between a wall of the storage cavity 26 and the storage box 64 to enable the box to be prised out of the cavity.

In use, the storage cavity 26 with storage container 64, additional pockets 44 and detachable bag, can be used to carry whatever items are desired or needed by the child. The booster cushion 10 can be carried about either as a rucksack on the child's back or by using the grab handles 38. When a child travels in a vehicle, the booster cushion 10 can simply be used in the conventional manner. It may be desirable to shorten the shoulder straps 36 to their minimum length to avoid them getting in the way, or snagging on anything else on the vehicle seat. The straps 36, if detachable from the cover 34, may be detached and hang down into the foot well of the vehicle so as not to inhibit proper positioning of the booster cushion 10 against the vehicle seat.

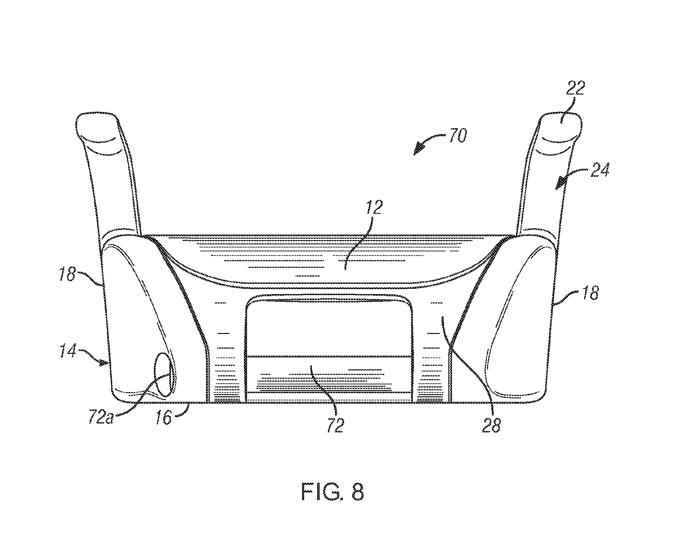

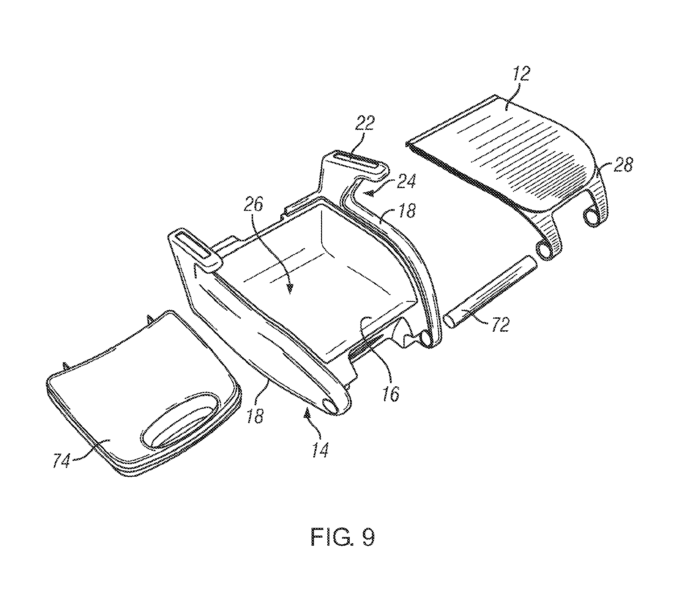

Referring to Figures 8 and 9, another example of a booster cushion 70 is shown. The booster cushion 70 of this example is substantially the same as the booster cushion 10 of Figure 1, with the following modifications. The same reference numbers are retained for corresponding features.

In this example, the door 28 forms the upper suface of the booster cushion 70, on which a child sits during use. The outer surface of the door 28 is contoured to form a comfortable seating surface, and may also be provided with padding. The storage cavity 26 is provided within the seat body 12, such that it is located below the door 28, rather than in the base 16 (as in Figure 1). The door 28 is hingedly mounted via hinge pin 72, which also forms a grab handle by which a user may carry the booster cushion 70. The door 28 is movable from the closed position shown in Figure 8 to an open position (rotated forwards and away from the seat body 14), to open the storage cavity 26.

A storage box 74 is also provided in this example and is adapted to be received within the storage cavity 26. The storage box 74 is retained within the storage cavity 26 by the door 28.

The hinge pin 72 has a slotted end 72a, by which the hinge pin 72 may be unscrewed from the seat body 14 to facilitate removal for cleaning or replacement. The hinge pin 72 is hollow to allow insertion of small objects into the hinge pin 72, to personalise the booster cushion 70.

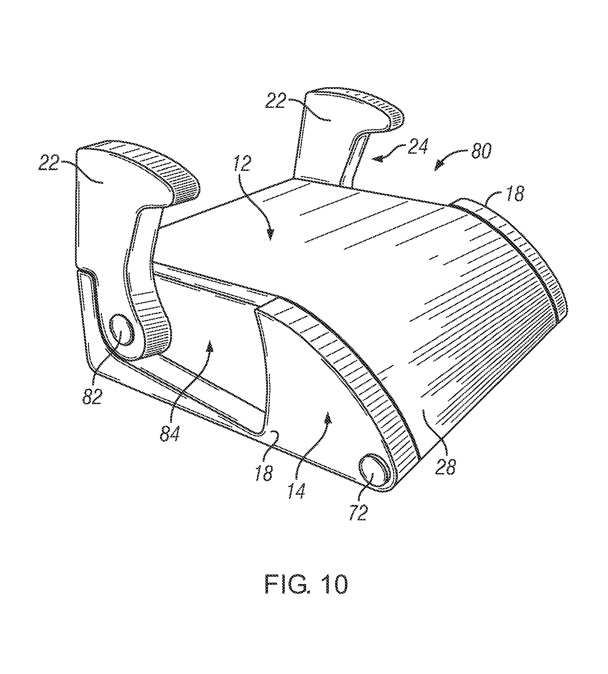

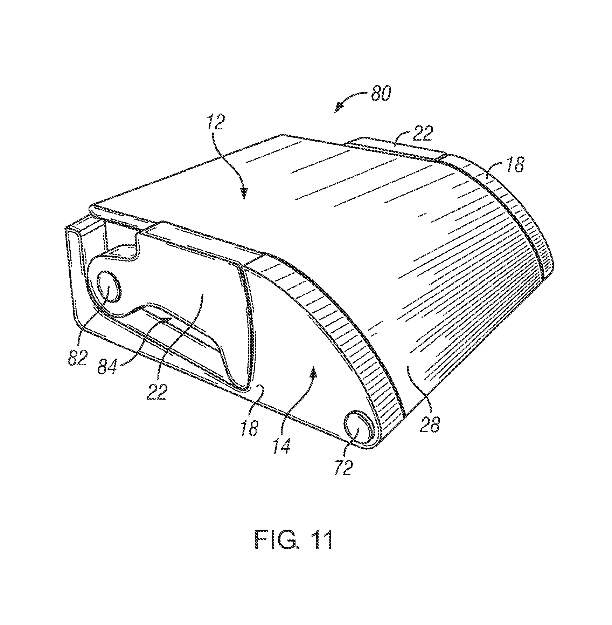

Figures 10 and 11 show a further example of a booster cushion 80 according to the invention. The booster cushion 80 is substantially the same as the previous example, with the following modifications. The same reference numbers are retained for corresponding features.

In this example, the lap belt engaging lugs 22 are pivotably mounted on a pivot pin 82. Recesses 84 are provided in the side walls 18 and are adapted to receive the respective lugs 22 therein, as shown in Figure 11. The lugs 22 are pivotable between a deployed position (shown in Figure 10) and a stowed position (shown in Figure 11) in which they are fully received within the recesses 84.

The lap belt lugs 22 fit neatly into the respective recesses 84 in the stowed position, so becoming flush with the side of the seat body 14. The shaping of the lugs 22 which defines the recess 24 for receiving a lap belt also ensures that there is space between the lug 22 and the bottom of the respective recess 84 to allow a user to locate their fingers onto the lug 22, to pull the lug 22 upwards towards the deployed position.

The lugs 22 may alternatively be provided with recesses or cut-out section on their external sides, to form finger grips by which a user may manually engage the lugs 22 in order to move them from the stowed position to the deployed position.

In this way, an improved booster cushion is provided which is easily and comfortably portable and which doubles up as a storage container or rucksack. This avoids the inconvenience of having to carry both the bag and seat if a child is going to be travelling in different vehicles and needs to be provided with the appropriate seat each time, whilst also having other items such as school books or school equipment to carry about at the same time.

It will be appreciated that a number of variations and modifications to the precise details described are possible whilst still falling within the scope of the claims. For example, while the embodiments described have a storage container 26 accessed from the underside of the booster cushion 10 it will be apparent that more than one storage compartment could be provided and it would be possible for the booster cushion 10 to be formed such that the opening to one or more of the storage compartments 26 is in a side or upper surface rather than the underside. Likewise, the precise details of how the storage compartment is opened and closed, the various carrying straps and handle, and how it is arranged to stand up to storage could be altered. The straps may be provided directly on the seat body of the booster cushion, rather than on a cover for the booster cushion.

## Claims

1. A booster cushion comprising a seat body, the seat body including at least one storage compartment, and carrying means to enable the booster cushion to be carried and further comprising a storage container locatable in at least one storage compartment and removable therefrom.

2. A booster cushion as claimed in claim 1, wherein the carrying means comprising one or more shoulder straps enabling the booster cushion to be carried in the manner of rucksack.

3. A booster cushion as claimed in claim 1 or claim 2, wherein the carrying means comprises at least one handle.

4. A booster cushion as claimed in any preceding claim, wherein the booster cushion comprises a user support side and an opposing underside and at least one storage compartment is formed in the underside.

5. A booster cushion as claimed in any preceding claim, further comprising a removable cover fitted over the seat body.

6. A booster cushion as claimed in claim 5, wherein the carrying means are attached to the cover.

7. A booster cushion as claimed in claim 5 or claim 6, wherein the cover further comprises additional storage pockets.

8. A booster cushion as claimed in any of claims 5 to 7 further comprising fixing means to secure the cover to the seat body.

9. A booster cushion as claimed in any of claims 5 to 8, wherein the cover further comprises a flap which can be opened to allow access to the or each storage compartment.

10. A booster cushion as claimed in claim 9, further comprising reinforcing means on the cover to limit the extent to which the flap is openable.

11. A booster cushion as claimed in any of claims 5 to 10, wherein the cover further comprises attachment means for releasably attaching one or more accessories.

12. A booster cushion as claimed in claim 11, wherein the accessory comprises a storage bag engageable with the attachment means on the cover.

13. A booster cushion as claimed in claim 12, wherein the bag, when attached to the cover, is received against a user support side of the seat body.

14. A booster cushion as claimed in any of the claims 5 to 13, wherein the cover further comprises padding for the comfort of the user when carrying the booster cushion in the manner of a rucksack.

15. A booster cushion substantially and hereinbefore described and with reference to Figure 7.

16. A booster cushion as claimed in any preceding claim, wherein the booster cushion further comprises first and second lap belt engaging members provided on the seat body.

17. A booster cushion as claimed in claim 16, wherein the lap belt engaging members are movably mounted on the seat body, the lap belt engaging members being movable between a deployed position, in which they extend generally outwardly from the seat body for engagement with a vehicle lap belt, and a stowed position, generally adjacent the seat body.

18. A booster cushion as claimed in claim 17, wherein the lap belt engaging members are pivotably mounted on the seat body.

19. A booster cushion as claimed in claims 17 or 18, wherein the booster cushion further comprises first and second side walls provided between the user support side and the underside, the side walls being provided with recesses adapted to receive a respective lap belt engaging member in its stowed position.

20. A booster cushion as claimed in any preceding claim, wherein the booster cushion further comprises a door connected to the seat body which can be opened to allow access to at least one storage compartment and closed to close the storage compartment.

21. A booster cushion as claimed in claim 20, wherein the booster cushion further comprises handle means by which a user can carry the booster cushion.

22. A booster cushion as claimed in claim 21, wherein the handle means is provided between the side walls.

23. A booster cushion as claimed in claim 22 or 23, wherein the handle forms the hinge pin for the door.
